# EUROPEAN PATENT APPLICATION

(11) **EP 0 615 684 A1**
(43) Date of publication of application: **21.09.1994**
(21) Application number: 94104015.6
(22) Date of filing: 15.03.1994
(51) Int. Cl.: A01G 31/02

(54) **Hydroponics method**

(30) Priority: 16.03.1993 JP 82633/93; 22.12.1993 JP 346589/93; 22.12.1993 JP 346590/93
(71) Applicant: Yanohara, Yoshitami, Osaka-shi, Osaka-fu (JP)
(72) Inventor: Yanohara, Yoshitami, Osaka-shi, Osaka-fu (JP)
(74) Representative: Schoppe, Fritz, Dipl.-Ing.

(57) **Abstract**

A hydroponics method for sizably enhancing the growth of a plant by activation for supply of rich oxygen to microbes in plant's roots and/or in a culture solution and thereby improving their activity comprising a step of preparing a bed (12), a step of placing a planting panel (36) planted with a plant plantings freely removable, a step of storing in the bed a culture solution containing microbes effective for growing plants, a step of suspending a botanical powdery charcoal and cray minerals as microbe holders as good housing for microbes in the culture solution in the bed, a step of waving (50) the culture solution to suspend microbe holders in the culture solution with simultaneous exposure of the plant's roots in the culture solution to the air periodically and a step of putting in the culture solution in the bed natural organic matter such as animal and vegetable matter manure.

## Description

### BACKGROUND OF THE INVENTION

### Field of the Invention:

The present invention relates to hydroponics method, and more particularly, to a hydroponics method for cultivation of green vegetables such as a Welsh(spring) onion, Chrysanthemum coronarium, Brassica Rapa var. pervidis, a honewort and lettuce, rootcrops such as a Japanese radish, a carrot and a burdock, fruits and vegetables such as an eggplant, a cucumber, an Oriental melon , a tomato, a strawberry and a melon, and flowering such as a carnation, a chrysanthemum and a tulip.

### Description of the Prior Art:

As a conventional hydroponics method providing the background for the present invention may be cited, for instance, what is based on a circulation pump system. In this hydroponics method based on the circulation pump system, service water from a water source is stored in a tank and fertilizer salts et cetera are dissolved in it to prepare a culture solution. The prepared culture solation is pumped up, and through a pipe tube, the culture solution is fed into the bed interiorly. In this case, a given amount of the culture solution overflows through the drain port, and through a pipe tube naturally falls into the tank. In this hydroponics method have been used many alternative aeration systems for supplying a large amount of oxygen to the culture solution circulation route such as aerator, sprayer and natural falling system.

With any variation of this hydroponics method, however, various complicated apparatuses and devices were required for keeping oxygen in the air dissolved into the culture solution and high initial and running cost were bound to be quite high.

By such aeration systems, however, the amount of oxygen dissolved in the culture solution was insufficient. That is to say, the amount of oxygen possibly fed from the culture solution to the roots of a plant was insufficient. Hence, it could not be desired to have plant's growth largely accelerated by any of the conventional hydroponics methods.

### SUMMARY OF THE INVENTION

Therefore, a principal object of the present invention is to provde a hydroponics method for sizable improvement of plant's growth simply at a reasonable cost.

The present invention is directed to a hydroponics method for sizably enhancing the growth of a plant by activation for feeding of rich oxygen to microbes in plant's roots and/or a culture solution and thereby improve their activities comprising a step of preparing a bed, a step of providing a planting panel for planting a plant freely removably in the bed, a step of storing a culture solution containing microbes useful for growth of the plant in the bed, a step of putting microbe holders such as powdered or granular botanical charcoal and clay minerals, which house microbes, into the culture solution in the bed, a step of waving the culture solution for suspending the microbe holders therein with periodical exposure of the plant's roots in the culture solution to the air, and a step of putting natural organics such as animal and vegetable matter manure into integrated culture solution to thereby largely enhance plant's growth.

A microbe holder is preferred to include at least one of botanical charcoals and clay minerals. As natural organic matter it is preferred to use animal and/or botanical manure.

It is also preferred to periodically displace the water level of the culture solution in the bed vertically to cause ebb and flow of the the culture solution in the bed to thereby periodically expose the plant's roots in the culture solution to the air.

Another step of inorganizing the natural organic matter by means of microbes in the culture solution and forming the plant's nutrients in the bed may be included.

In the hydroponics method as described above microbe holders in the culture solution are suspended therein when the culture solution is waved. Microbes holders have adsorbed thereto microbes useful for plant growth, hence they form housing for such microbes. The microbes held by microbe holders are disintegrated with the natural organic matter as bait and thus inorganize such organic matter.

Since, moreover, oxygen in the air is dissolved into the culture solution and the resultant increase of the dissolved oxygen in the culture solution makes the liquid aerobic and, at the same time, the roots of the plant planted in the planting panel are periodically exposed from the culture solution into the air, hence ample oxygen is supplied to the plant's roots from the culture solution and also from the air. Hence, the microbes existing in the culture solution and the microbes symbiotic relation with the plant's roots are activated and the inorganic matter obtained through decomposition of these microbes is taken as nutrient for the plant through its roots.

According to the present invention, environments optimum for growth of the microbes are created by the microbe holders in the culture solution, and ample oxygen for the microbes effective for growth of the plant and plant's roots is supplied, hence its activity is further activated and the plant's growth is further enhanced and the natural organic matter are inorganized by means of the action of microbes in the culture solution, and the compost is formed, that is, nutrient is further formed.

Moreover, according to the invention, the dissolved oxygen's concentration in the culture solution is further increased by waving the culture solution. And then, the action of microbes is further activated. This microbes decomposes the organic matter into inorganic matter. Hence the exchange frequency of the culture solution can be made extremely small. Since waving the culture solution means agitating the plant's roots, therefore, the plant's carbon assimilation effect can be enhanced.

Compared with a conventional hydroponics method, a large-sized and high power pump, an aerator for supplying oxygen into culture solution, complicated devices such as sprayers and facilities such as exchange tub are not necessary. Hence, the hydroponics method of the present invention is definitely lower in running cost than the prior art counterpart.

The above and other objects, features, aspects and advantages of the present invention will become more apparent from the following detailed description of the embodiments with reference to the accompanying drawings.

### BRIEF DESCRIPTION OF THE DRAWINGS

Fig. 1 is a schematic illustrative front view showing an example of hydroponic apparatus required for execution of the method of the present invention.

Fig. 2 is a perspective view of the essential parts of the hydroponic apparatus shown in Fig. 1.

Fig. 3 is an illustrative side view of the essential parts of the hydroponic apparatus shown in Fig. 1 and Fig. 2.

Fig. 4 is an illustrative plan view of the essential parts of the hydroponic apparatus shown in Fig. 1, Fig. 2 and Fig. 3.

Fig. 5 (A) is an illustrative section view of the mounting stste of a planting panel show in Fig. 1,Fig. 2, Fig. 3 and Fig. 4. Fig. 5 (B) is an illustrative section view show in another mounting state of a planting panel.

Fig. 6 is an illustrative front view of the essential parts showing the way waves are made in the culture solution in the bed by means of a hydroponic apparatus shown in Figs. 1, 2, 3 and 4.

Fig. 7 is an illustrative front view show in other example the hydroponic apparatus required for execution of the present invention.

Fig. 8 is a perspective view of the essential parts showing further other example of the hydroponic apparatus required for execution of the invention.

Fig. 9 is a perspective view showing another example of the hydroponic apparatus required for execution of the invention.

Fig. 10 is a perspective view showing further another example of the hydroponic apparatus required for execution of the invention.

Fig. 11 is a perspective view showing still further example of the hydroponic embodiment required for execution of the invention, of which (A) is an illustrative side view and (B) is an illustrative front view of the essential parts.

Fig. 12 is a perspective view showing the essential parts of the hydroponic apparatus shown in Fig. 11.

Fig. 13 is an illustrative view show in further another example of the hydroponic apparatus required for execution of the invention.

Fig. 14 is an illustrative view show in another embodiment of the invention.

Fig, 15 is an illustrative view show in further another embodiment of the invention.

Fig. 16 is an illustrative view showing further another example of the hydroponic apparatus required for execution of the invention.

Fig. 17 (A) is an illustrative view showing still another example of the hydroponic embodiment required for execution of the invention, and Fig. 17 (B) is an illustrative view showing a varied example thereof.

Fig. 18 is an illustrative view showing further another example of the hydroponic apparatus required for execution of the invention.

### DESCRIPTION OF THE PREFERRED EMBODIMENT

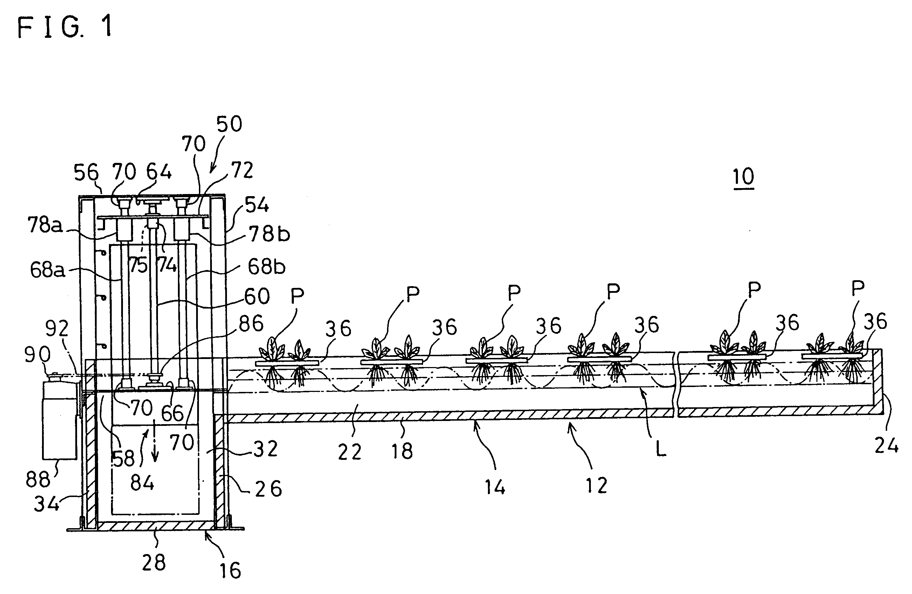

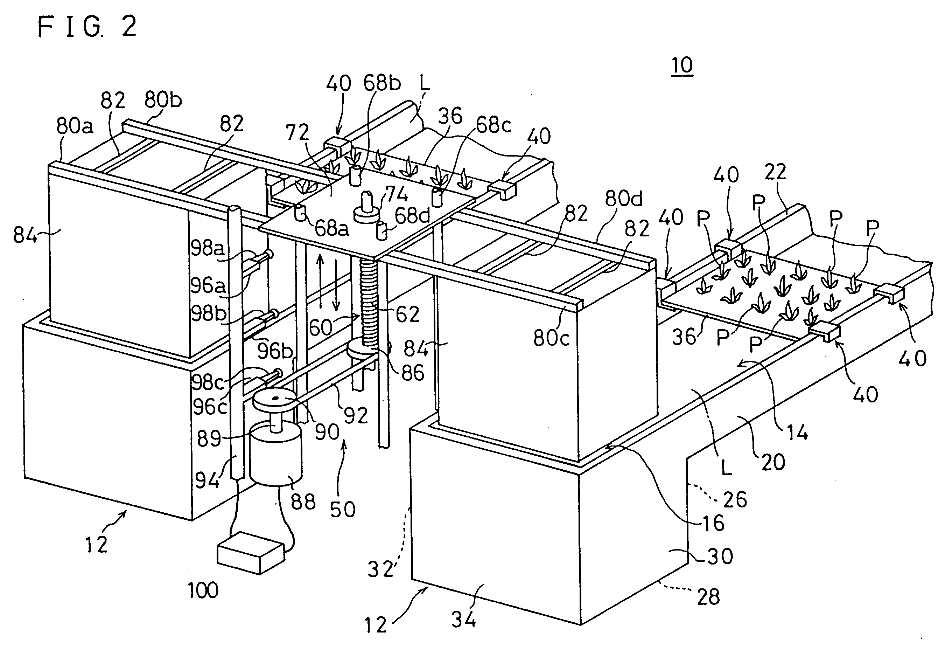

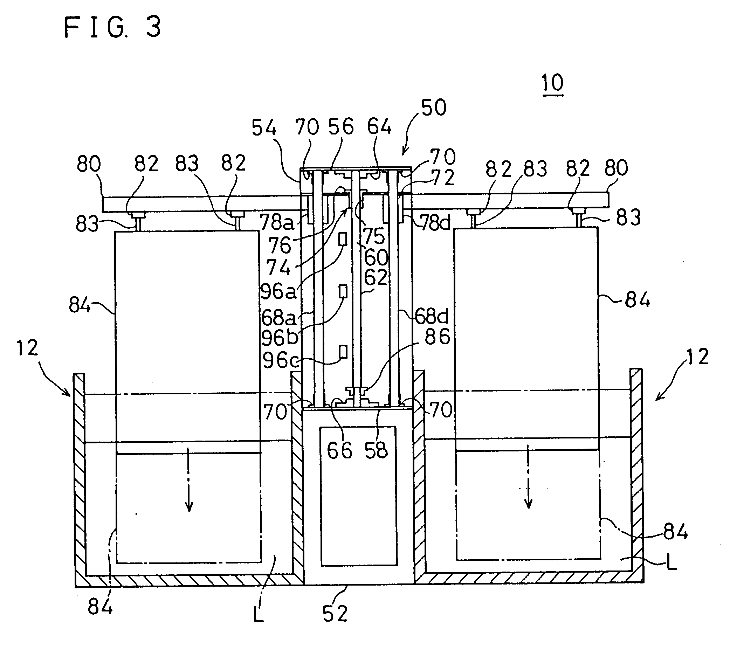

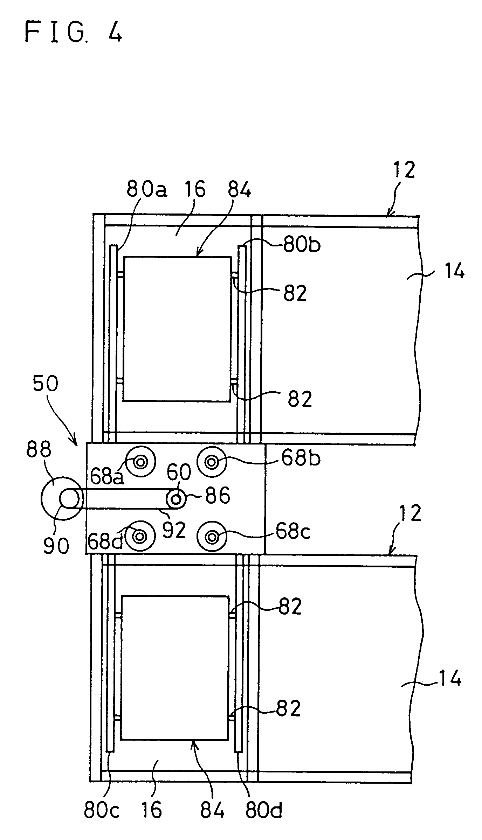

Fig. 1 is a schematic illustrative front view showing an example of a hydroponic apparatus required for execution of the present invention, Fig. 2 is a perspective view of the essential parts thereof, Fig. 3 is an illustrative side view of its essential parts and Fig. 4 is an illustrative plan view of Fig. 4. In this embodiment will be described an example of the hydroponic apparatus required for execution of the present invention.

The hydroponic apparatus 10 includes a box-shaped bed 12 which is opened the top of its. This bed 12 is primarily composed of a culture tub 14 and a tide tub 16 communicating with the culture tub 14. This tide tub 16 are mounted to one longitudinally end portion of the bed 12. The tide tub 16 collaborates with a tide and wave maker 50 described below to generate ebb and flow through vertical displacement of the water level in the bed 12, also waving the culture solution in the bed 12.

The culture tub 14 includes, for example, a rectangular first bottom member 18. At one lateral end and the other end of the first bottom member 18 there are formed the first front member 20 and the first back member 22. The first front member 20 and the first back member 22 are both rectangular and same in size, and are formed perpendicularly upward from one lateral end and the other lateral end of the first bottom member 18. Meanwhile, there are formed the first side member 24 extends perpendicularly upward from one longitudinal end of the first bottom member 18. The vertical length of the first side member 24 is the same as that of the first front member 20 and that of the first back member 22.

Further, a rectangular partitioning member 26, for example, is formed as a plane extends downward perpendicularly from the other longitudinal end of the first bottom member 18. At the lower end of this partitioning member 26 there is, for example, formed a rectangular second bottom member 28, extending in the opposite direction perpendicularly from the lower end with respect to the first bottom member 18. On one and the other longitudinal end of the second bottom member 28, rectangular second front member 30 and the second back member 32 are formed longitudinally. The second bottom member 30 and the second back member 32 are formed in same size and extend perpendicularly upward from one and the other longitudinal end of the second bottom member 28. In this case, it is so arranged that the upper end face of the second front member 30 and the upper end face of the first front member 20 come to be the same in height, and the upper end of the second back member 32 and that of the first back member 22 come to be also the same in height.

Between the second front member 30 and the second back member 32 there is formed the second side member 34 which forms upward from the lateral end of the second bottom member 28. The length in height of this second side member 34 is the same as the second front member 30 and the second back member 32, while the longitudinal length of the second side member 34 is the same as that of the second bottom member 28.

The first bottom member 18, the first front member 20, the first back member 22, the first side member 24, the partitioning member 26, the second bottom member 28, the second front member 30, the second back member 32 and the second side member 34 are made of, for example, synthetic resin materials and generally by injection molding. Thus, the bed 12 is formed in one united body by aforementioned individual members. The bed 12 may as well be formed by connecting and/or bonding by the use of e.g. adhesives, bolt and nut or other jointing means. The materials of these members are not limited to such synthetic resins and may as well be expanded materials, aluminum alloys and stainless steels or water-proofed wooden materials may be used.

The bed 12 is supported by a frame (not shown) assembled of a plurality of square pipes using connectors. In this embodiment, as shown in Fig. 2, Fig. 3 and Fig. 4, two beds 12, 12 are arranged in two rows traversally at a given distance. And further, the bed 12, which is normally held by a frame, may as well have its tide tub 16 buried in a hole of the mating depth and with its culture tub 14 put thereon.

Further, on top of the bed 12 there are provided a plurality of rectangular planting panels 36. The planting panels 36 are made of a synthetic resin material such as polystyrene foam styrol has formed therein a plurality of, for example, round holes 38 at proper distances.

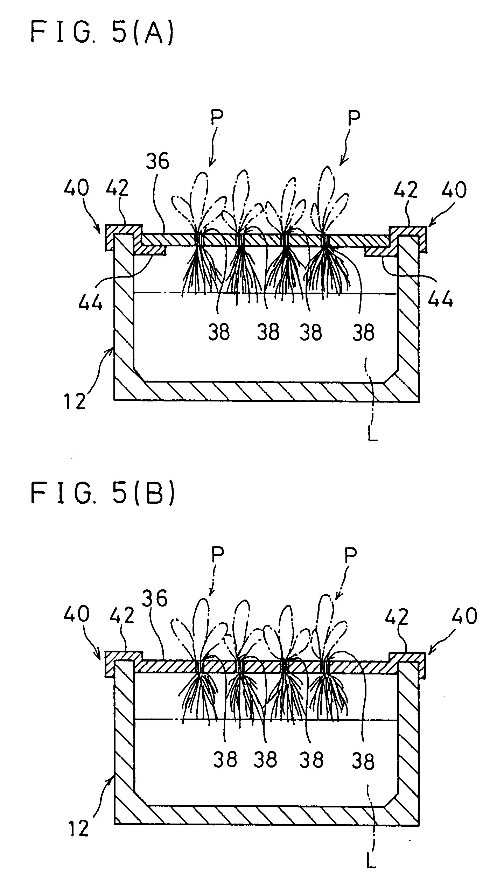

This planting panel 36 is mounted on the bed 12 by a mounting member for planting panel as shown in Fig. 5 (A). The mounting member for planting panel 40 includes, for example, a U-sectioned mating piece 42 and at one end of the mating piece 42 there is formed, for example, a rectangular cradle part. The cradle part 44 is formed extending perpendicularly from one end of the mating piece 42. The mating piece 42 and the cradle part 44 are integrally made of e.g. a synthetic resin. When the planting panel 36 is mounted on the bed 12, there are fited, for example, four mounting members for planting panels 40 into the lateral ends of the bed 12. And the planting panel 36 is placed on the cradle part 44 of the mounting member for planting panel 40 and the planting panel 36 is removably placed on the bed 12.

The mounting member for planting panel 40 may possibly be made to be integral with the planting panel 36. In this case, as shown on the Fig. 5 (B), the mating pieces 42 of the mounting member for planting panel 40 are secured to one and the other longitudinal ends of the planting panel 36.

The holes 38 of the planting panels 36 have set therein, for example, urethane blocks 46 for planting respectively. A plant P are planted in the urethane blocks 46 for planting. In this embodiment seed leaves of the plant P developed and raised are planted. Alternatively, each urethane blocks 46 may be planted with seeds of the plant P. In this hydroponic apparatus 10 of this embodiment the plant P may particularly be green vegetables such as a Welsh(spring) onion, Chrysanthemum coronarium, Brassica Rapa var. pervidis, a honewort and lettuce, rootcrops such as a Japanese radish, a carrot and a burdock, fruits and vegetables such as an egg plant, a cucumber, an Oriental melon, a tomato, a strawberry and a melon, and flowering such as carnation, a chrysanthemum and a tulip.

Further, this hydroponic apparatus 10 with its tide and wave maker 50 has a displacement means for creating tide and waving phenomenon by changing vertically and periodically the water level of the culture solution or beating the surface thereof for waving the surface of the culture solution.

The tide and wave maker 50 is installed at one longitudinal end of the bed 12 and includes, for example, the rectangular supporting pedestal 52. As shown in Fig. 2, Fig. 3 and Fig. 4, the supporting pedestal 52 is located at one longitudinal end of the beds 12, 12 as seen from plane of the bed 12. The supporting pedestal 52 is installed between two beds 12, 12. On the topside of the supporting pedestal 50 is mounted on a supporting body 54. On the top end face and the under end face of the supporting body 54, rectangular supporting plates 56 and 58 are secured thereto.

The supporting body 54 has secured thereto a revolving shaft 60, which extends between the supporting plates 56 and 58. There is provided a male screw portion 62 to the circular direction mid portion of axially the revolving shaft 60. The revolving shaft 60 has one axial end thereof free to rotate supported at the center of the supporting plate 56 with a bearing 64 and has the other axial end thereof supported also free to rotate supported at the center of the supporting plate 58 with a bearing 66. Between the supporting plates 56 and 58 there are formed four cylindrical guide rods 68a, 68b, 68c and 68d to arround the revolving shaft 60 at a distance. One axial end and the other axial end of four guide rods 68a, 68b, 68c and 68d are supported to the supporting plates 56 and 58 by the flange 70 respectively.

Further, the revolving shaft 60 is provided with an elevator plate 72 for vertical displacement axially thereof. Namely, the rrvolving shaft 60 is provided at axially mid portion thereof with a T-sectioned socket member 74 having a female screw portion 75 mating with the male screw portion 62 of the revolving shaft 60. This socket member 74 has fixed thereto a rectangular elevator plate 72. In this case, the elevator plate 72 has formed at the center and four corners thereof e.g. round holes (not shown). The hole at the center of the elevator plate 72 has inserted through a revolving shaft 60. The elevator plate 72 is fixed to the socket member 74 by a bolt-and-nut means or the like, which fixes the periphery of the central hole of the elevator plate 72 to the flange part 76 of the socket member 74 to thereby fix it to the socket member 74.

The four corners of the elevator plate 72 have variably guided therethrough vertically by the guide rods 68a - 68d. In this case underneath the holes at the four corners of the elevator plate 72 there are, for example, affixed cylindrical guide posts 78a, 78b, 78c and 78d. And these four cylindrical guide posts 78a - 78d have their topsides secured to the elevator plate 72 by proper fixing means such as bolt-and-nut.

The elevator plate 72 has formed thereon, for example, four arm members 80a, 80b, 80c and 80d projecting from both lateral sides toward the bed 12. These arm members 80a - 80d are formed, for example, bar-like rectangle in cross-section. In this case, two arm members 80a and 80b have one axial end thereof extended upward from one lateral end toward the bed 12 and projecting beyond it in parallel to each other. Similarly, each one axial end of another pair of arm members 80c and 80d are projecting from the other lateral end of the elevator plate 72 upward through the other bed 12. These arm members 80 have the other axial ends fixed to the other peripheral surface of the guide posts 78a - 78d.

Under the arm members 80a and 80b there are provided cubic body such as parallelepiped tide and wave-making body 84 made of, for examples, a synthetic resin material. In this case, between the arm members 80a and 80b and between the arm members 80c and 80d there is provided each one, for example, rectangle-sectioned bar-like mounting member 82, 82 set at a given interval. Under such mounting members 82 there is provided a tide and wave-making body 84 by means of a fixing means 83 such as bolt-and-nut.

Meanwhile, axially under the revolving shaft 60 there is provided a pulley 86. And on one side of the supporting member 52 there is mounted a motor 88 as a free driving means for the revolving shaft 60. The driving shaft 89 of the motor 88 has mounted thereon another pulley 90. Between the two pulleys 86 and 90 there is set an endless loop-formed belt.

Hence, when the motor 88 is driven to rotate, the rotary force is transmitted to the revolving shaft 60 via a pulley 90, belt 92 and pulley 86. If the revolving shaft 60 is driven to rotate, the socket member 74 screwed with the rotary shaft 60 is displaced axially or along the axis of the revolving shaft 60. In this embodiment, it is so arranged that, when the motor 88 is driven in the reverse direction, the socket member 74 rises along the axis of the revolving shaft 60.

By this time, the arm members 80a - 80d are displaced axially the axis of the revolving shaft 60 with the socket member 74 go up and down. And then tow tide and wave-making body 84, 84 go up and down.

In the vicinity of the elevator plates 72, as sensors for detecting the position of which the elevator plate 72 go up and down, limit switches 96a, 96b, 96c and 96d are mounted in order to control a displacement quantity of an up-and-down motion with the tide and wave-making body 84. In this case in the vicinities of supporting body 54 there are provided for example, a cylindrical holding member 94, and three limit switches 96a - 96c are mounted on it at given distances from the holding member 94 in its axial direction. These limit switches 96a - 96c are arranged on the way the elevator plate 72 is bound to elevate. That is, when the elevator plate 72, whose revolving shaft 60 is bound to elevate, the points (not shown) are opened and closed with the operating pieces 98a, 98b and 98c of the limit switches 96a, 96b and 96c being pressed thereby.

The motor 88 and limit switches 96a - 96c are connected electrically over a control part 100 therewith. This control part 100 is for operating the tide and wave-making body 84 periodically. It receives electric signals from the limit switches 96a - 96c and turns the motor 88 on/off as well as controls it to turn normally or in reverse mode.

The rise and fall positions of the tide and wave-making body 84 have been detected by the limit switches 96a, 96b and 96c and the vertical movement thereof is controllable. In this embodiment the length of stroke of the elevator plate 72 is controllable by means of, for example, the limit switches 96a and 96c.

The elevator plate 72 has the tide and wave-making body 84 stopped at the top limit when the operating piece 98a of the limit switch 96a is pushed and the elevator plate 72 starts lowering after the lapse of a predetermined time. When the elevator plate 72 has pushed the operating piece 98c of the limit switch 96c, the tide and wave-making body 84 stops at the lower limit. Then, after the lapse of the predetermined time the elevator plate 72 again starts lowering and, when the elevator plate 72 has pushed the operating piece 98c of the limit switch 96c, the tide and wave-making body 84 stops at the lower end. Further, upon the lapse of the predetermined time, the elevator plate 72 is raised until the operating piece 98a is pushed. In this case, the stroke between the upper and lower limits of the tide and wave-making body 84 is the same as the length between the limit switch 96a and 96c, this being the same as the vertical stroke of the tide and wave-making body 84 into and out of the tide tub 16 at a predetermined cycle.

Hence, on this hydroponic apparatus 10 it is possible to raise or lower the water level of the culture solution in the bed 12 in order to control the displacement quantity of the up-and-down motion with the tide and wave-making body 84. And then, It is possible to give rise to a ebb and flow phenomen. As a result, it is possible to raise or lower the water level of the culture solution in the bed 12 as a kind of plant which are cultivated in the bed 12 by this hydroponic apparatus 10. If in a hydroponic apparatus 10 the vertical stroke of the tide and wave making body 84 is constant, it is possible to raise the level of the culture solution in the bed 12 by increase the capacity of the tide and wave-making body 84 and raising the depth of the tide tub 16 to thereby make it deeper.

It is also possible to make the vertical stroke of the tide and wave-making body 84 smaller to thereby beat the surface of the culture solution periodically to give rise to a waving phenomenon.

Now the working condition of the tide and wave maker 50 of this hydroponic apparatus will be explained.

With this hydroponic apparatus 10 the tide and wave-making body 84 is placed in the predetermined position in the tide tub 16 of each bed 12. In this case, it is so arranged that when the tide wave-making body 84 is inserted to be near the bottom of the tide tub 16, the roots of the plant P supported by the planting panel 36 are soaked in the culture solution. And then, the water level of the culture solution is taken as the initial set level. In this embodiment the tide and wave-making body 84 is so arranged that the elevator plate 72 is pushing the operating piece 98c of the limit switch 96c.

When the motor 88 as the driving means is driven, the pulley 90 set on a driving shaft 89 of the motor 88 rotates. When the pulley 90 rotates, another pulley 86 set on the revolving shaft 60 is caused to rotate through the belt 92. The socket member 74 screwed with the male screw portion 62 of the revolving shaft 60 is vertically moved along its axis. The elevator plate 72 is moved axially along the guide rods 68a - 68d together with the guide posts 78d - 78d. Further, decreasing the amount of displacement stroke of the two tide and wave-making bodies 84, 84 means these beating the surface of the culture solution, this resulting in waving phenomenon occurs in the bed 12. If the amount of vertical displacement stroke should be increased, this means increase of the stroke of the culture solution in the bed 12, this resulting in an ebb and flow phenomenon occurs in the bed 12.

Now explanation will be made of an example of the plant culture method by the use of this hydroponic apparatus 10.

First, the culture solution L is stored in the bed 12 of the hydroponic apparatus 10. As the culture solution L may be used a nutrient solution with fertilizer salts as nutrients for plants P dissolved in water and as microbes useful for plant growth organic matters such as organic matter disintegrate microbes including a lactic acid bacteria and a yeast fungus may be added. These organic matter disintegrate microbes have included therein a photosynthesis bacteria, a heterotrophy microbes et cetera.

After, on the bed 12 there are removably fixed a plurality of planting panels 36 planted with seedlings and planting of rootcrops such as a radish, a carrot and a burdock, and fruit vegetables such as a eggplant, cucumber, an Oriental melon, a melon and a tomato. In this embodiment the water level of culture solution L is set initially so that when the tide and wave-making body 84 is inserted into the tide tub 16 of the bed 12, the roots of the plant P are soaked in the culture solution.

Further, the culture solution in the bed 12 is admixed as microbe holder as housing for such organic matter disintegrate microbes, for example, botanical powdery charcoal or botanical granular charcoal and powdery or granular clay minerals. The particle size or granule size of such botanical powdery or granular charcoal as well as of such clay mineral powder or granule are of such size with no risk of clogging the fine holes of urethane block 46 being clogged, that is, a bit larger than the fine holes thereof. Microbe holders are admixed into the culture solution L in the bed 12 by, for example, manual operation. The microbe holders mixed into culture solution may be either of the botanical powdery charcoal and the clay mineral powder. Besides botanical powdery charcoal, botanical granular charcoal, powdery and granular clay minerals, any of natural stones and ceramics in powdery and granular form may as well be mixed in culture solution. It is also possible to use more than one of botanical powdery charcoal, pulverized clay mineral, natural stone and ceramics as additives in culture solution. The botanical charcoal includes charcoal of phanerogam including charcoal of seaweeds. As charcoals of seaweeds preferred are of brown algae such as sea tangle, wakame seaweed(Undaria pinnatifida) and gulfweed. Such brown algae are especially rich in minerals and metallic ions and are useful for adding these elements to a decomposable microbe which can decompose organic matter. To the culture solution in the bed 12 are now added natural organic matters such as compost, green manure, animal manure, fish manure, charcoal ashes and bone powder, being of animal and vegetable matter manure. In this embodiment chicken droppings, cow manure and weeds of the same family as the vegetables to be cultured by the use of this hydroponic apparatus 10 are added to the culture solution L in the bed 12, for example, by hand labor.

Meanwhile, this hydroponic apparatus 10 includes a tide and wave maker 50, which is operated to vertically move a tide and wave-making body 84 at a given period and in long strokes for thus raising and lowering the water level of the culture solution L in the bed 12, which results in an ebb and flow phenomenon are occurs to the culture solution in the bed 12.

Further, in this hydroponic apparatus 10 the tide and wave maker 50 is operated at a predetermined period and at short strokes, this resulting in beating of the surface of the culture solution L in the bed 12 and giving rise to a waving phenomenon for the culture solution L in the bed 12. In this case the surface of the culture is beaten by the tide and wave-making body 84 for the plant P's roots to be exposed to the air periodically.

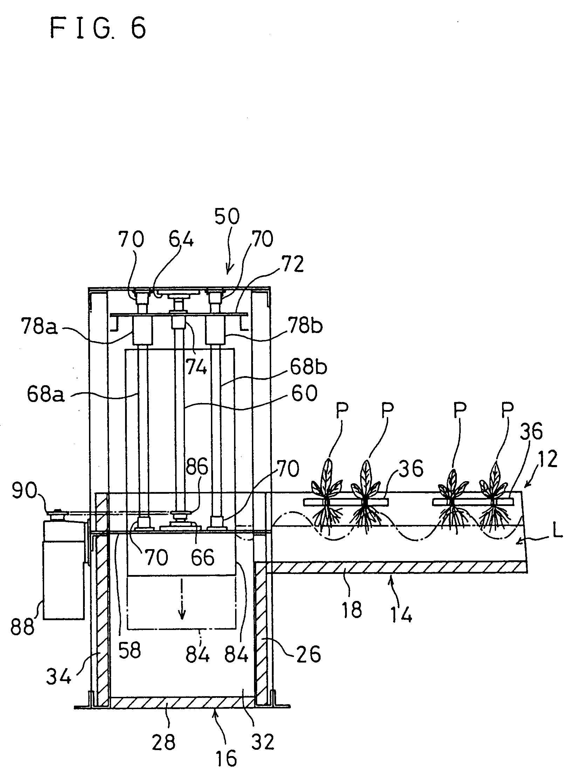

That is, as shown in Fig. 6 it is possible to make waves in the bed 12 by the vertical displacement of the tide and wave-making body 84. This means to set shorter the vertical stroke than the vertical stroke of the elevator plate 72. In this case. that is, the tide and wave-making body 84 moves up and down at the same stroke as the length between the same limit switches 96b and 96c. Waves can then be made as the bottom end face of the tide and wave-making body 84 beats the surface of the culture solution in the bed 12. In this embodiment, it is so set up that the tide and wave-maker 84 makes a one vertical stroke and back in 1-3 seconds.

In this embodiment the microbe holder is agitated by the flow of its stroke to be suspended thereby. In this case, while the tide and wave maker 50 generates the waving phenomenon in the bed 12 by the tide and wave maker 50 with simultaneous inlet of the microbe holder into the culture solution in the bed 12. The microbe holder may as well be let into the culture solution immediate before and after generation of the waving phenomenon. It is also possible to have the microbe holder suspended in the culture solution with nearly colloidal state.

In this hydroponics method by the hydroponic apparatus 10 the ebb and flow difference occurs in the culture solution L in the bed 12 by displacing it vertically and periodically. Hence it is possible to have the roots of the plant P periodically exposed to the air as well as to directly supply oxygen in the air to the plant P's roots. Moreover, since oxygen of the air dissolves into the air contained into culture solution the plant P's roots are supplied with ample oxygen. Further, since ample oxygen is also supplied to the microbes in symbiotic relationship with the plant P's roots for activation of its activity, this resulting in acceleration of the growth of the plant P.

Moreover, in this hydroponics method by the hydroponic apparatus 10, botanical powdery charcoal or botanical granular charcoal and powdery or granular clay minerals are suspended by waving the culture solution in the bed 12. Microbes are adsorbed into suspended the microbes holder such as the botanical powdery charcoal or the botanical granular charcoal and the powdery or granular clay minerals. That is, these microbes holder serve as a shelter(housing) for such microbes. These microbes holder serve as a conductor for absorbing animal and vegetable matter manure. Moreover, the useful valuable microbes with symbiotic relationship to the roots of the plant P is increased as the botanical powdery charcoal or the botanical granular charcoal are suspend in the culture solution, this resulting in activating the growth of the plant P. Further, microbe holders are disintegrated with the natural organic matter as bait and thus inorganize such organic matter. In other words, nutrient for the plant is formed in the culture solution and the nutrient is taken through the roots of the plant. Moreover, A part of the nutrient piled on the bottom of the bed 12, and compost is formed. In this case, piled compost is taken out the exhaust port (not shown) of the bottom of the bed 12. In this hydroponics method by the hydoroponic appratus, there are formed symbiotic a place of the plant's and the microbes in the culture solution. In other words, propagationof the microbes effective for plant's growth, nutrient for the plant and piled compost are made up in the same place.

According to the present invention, environments optimum for growth of the microbes are created by the microbe holders in the culture solution, and ample oxygen for the microbes effective for growth of the plant and plant's roots is supplied, hence its activity is further activated and the plant's growth is further enhanced and the natural organic matter are inorganized by means of the action of microbes in the culture solution, and the compost is formed, that is, nutrient is further formed.

Moreover, since the root part (underground part) of the plant P absorbs ample oxygen not only from the air but also from the dissolved oxygen in the culture solution L through the interface plane of the culture solution L, adoption of the hydroponic method helps improve the effect of oxygen supply to the plant P's roots. Ample supply of oxygen is also feasible to rhizospheric microbes to plant P's root being also symbiotic relationship therewith, thus facilitating activation of microbes.

By causing the surface of the culture solution L to wave or ripple the specific surface area of the culture solution L can be improved with simultaneous generation of a lot of the heat of evaporation, this enabling prevention of the culture solution L's rise in temperature due to rise in atmospheric temperature even in mid-summer. According to the result of the inventor's experiment the rise in temperature was some 10 lower than the temperature in the house. Moreover, since waving the culture solution L' s surface in the hydroponic apparatus 10 causes natural breeze in the bed 12 as the plants as a whole are swayed, it is unnecessary to provide the air conditioning units such as blowers around the hydroponic apparatus.

Waving the culture solution L's surface sways the plant P's roots continuously, this resulting in exchange between carbon dioxide and oxygen. In this case, since saying of the plant P's roots is accompanied by the entire plant P including the above-ground part, gas exchange for the entire plant P is activated. That is, since the plant P as a whole is swayed, photosynthesis is activated and the plant P's growth is enhanced. According to the inventor's experiments, the plant P's swaying is 50-60 cm/s in terms of wind velocity, this being equal to twice the rate of activation of photosynthesis and 30% higher in plant's growth rate.

Further, waving of the culture solution L's surface causes simultaneous swaying of the underground and aboveground parts of the plant P, the plant P less subject to damage from insects such as aphides.

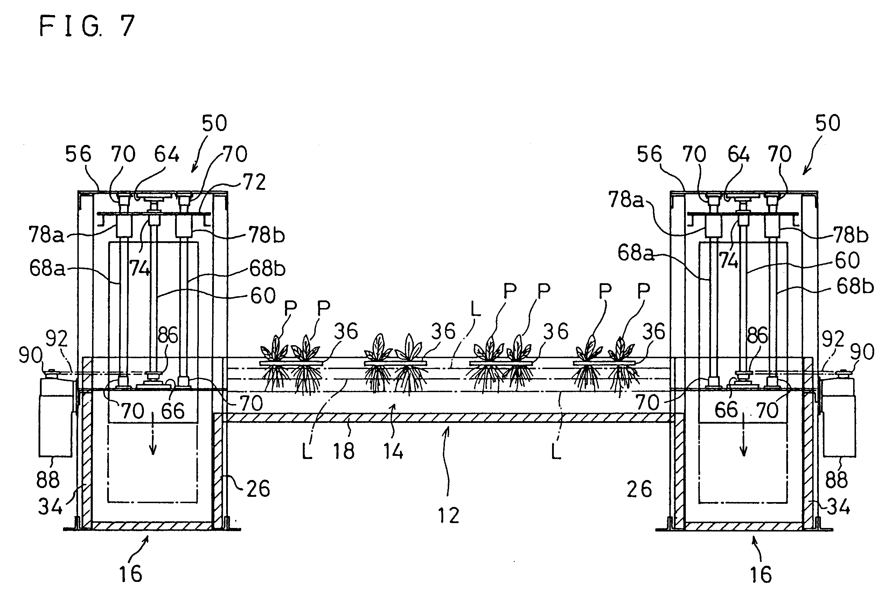

Fig. 7 is a front illustratory view showing another embodiment of the hydroponic apparatus required for execution of the pydoroponics method of the present invention.

The hydroponic apparatus 10 shown in Fig. 7 is characterized, compared with the apparatus shown in Fig. 1 - Fig. 4, in that tide and wave maker 50 are prepeared at one longitudinal end the other longitudinalend of the bed 12. In this case, tide tubs 16 are located at one end and at the other end of the bed 12 respectively. And above the respective tide tubs 16 are located at one longitudinal and the the other longitudinal end of the bed 12. Above each of these longitudinal ends are, like with the hydoroponic apparatus 10 show in Fig. 1 - Fig. 4, the vertically moveable tide and wave-making bodiy 84 are formed respectively. Even with the hydroponic apparatus 10 shown in Fig. 7, like with the hydroponic apparatus 10 shown in Fig. 1 - Fig. 4, it is possible to generate the ebb and flow phenomenon as well as waving phenomenon with regard to culture solution L so as to have the plant P's roots exposed to the air periodically, hence ample oxygen is supplied to the roots of the plant P and microbes in the culture solution and the growth of the plant P is activated. Hence, even with the hydroponic apparatus as shown in Fig. 7, effects similar to what is attainable with that shown in Fig. 1 - Fig. 4 are attainable.

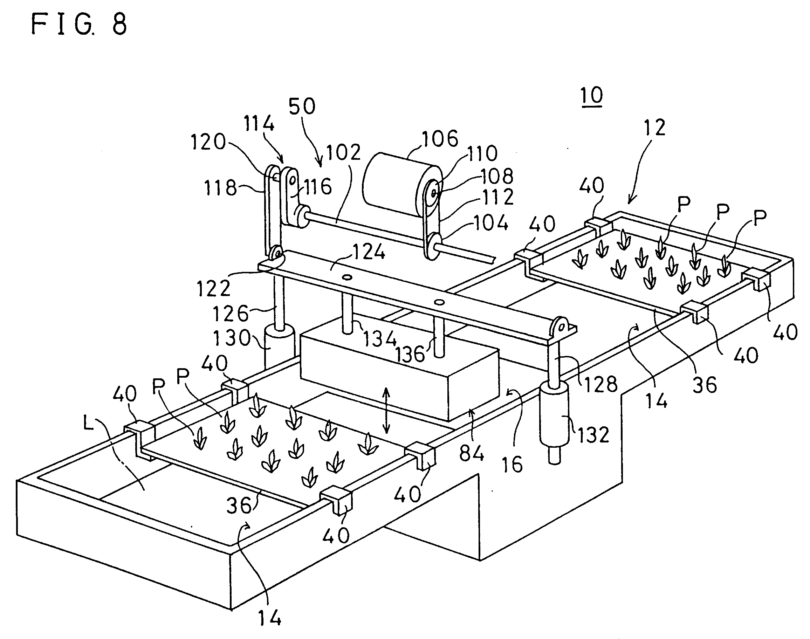

Fig. 8 is a perspective view of the essential parts showing further another example of the hydroponic apparatus required for execution of hydroponic method of the invention.

Compared with the hydroponic apparatus shown in Fig. 1 - Fig. 4, the hydroponic apparatus 10 shown in Fig. 8 is different especially ion the construction of the tide and wave maker 50. In the hydroponic apparatus 10 shown in Fig. 8 the tide and wave maker 50 is located in the longitudinal center of the bed 12. In this case the tide tub 16 are mounted to the longitudinal center of the bed 12 and the tide and wave-making body 84 is disposed above the tide tub 16.

The tide and wave maker 50 includes, for example, a cylindrical shaft 102 made of a metal. The shaft 102 is arranged to be freely rotatable above the tide tub 16 with its center at the longitudinal center of the bed 12. This shaft 102 is set freely rotatable by means of a bearing or the like on a frame (not shown) set at the center of the bed 12. At the axial center of the shaft 102 there is provided a pulley 104, and above the shaft 102 is provided a motor 106 for driving the shaft 102. A driving shaft 108 of the motor 106 has set thereon a pulley 110 and these pulleys 104 and 110 have set thereon and are connected by a loop of belt 112.

Further, one axial end and the other end of the shaft 102 have connected thereto a crank member 114. The crank member 114 includes, for example, an L-sectioned crank arm 116 and the end of this crank arm 116 has annexed thereto a freely rotatable working member 118. In this case, the axial upper end of of the working member 118 is free to rotate supported by the crank arm 116. Meanwhile, the axially lower end the working member 118 has pivotally held thereto a holding member 124 by means of a pin 122.

The holding member 124 is formed as a rectangular plate of e.g. synthetic resin, has formed extending therefrom at one longitudinal end and the other end thereof downward from the underside thereof e.g. cylindrical connecting rods 126 and 128. These connecting rods 126 and 128 are set through cylindrical guide posts 130 and 132. The connected rods 126 and 128 are also set through guide posts 130 and 132 vertically and slidably.

Meanwhile, under the holding member 124 there is a parallelepiped tide and wave-making body 84 as a cubic body made of a synthetic resin suspended therefrom. In this case, the tide and wave-making body 84 is suspended from the holding member 124 by, for example, bolt-and-nut adhere means.

The hydroponic apparatus 10 shown in Fig. 8 has a pulley 110 set on the driving shaft 108 of a motor 106 and the pulley 110 is driven as the motor 106 is started. As the pulley 110 is driven, the pulley 104 set on the shaft 102 rotates through the belt 112. As the pulley 104 rotates, the shaft 102 is bound to rotate and the crank member 114 connected to the shaft 102 starts acting. In this case the crank arm 116 of the crank member 114 rotates with the shaft 102 as the center, and the working member 118 moves vertically and reciprocally. As the working member 118 moves vertically, the holding member 124 moves likely together with the connecting rods 126 and 128 along the guide post 130 and 132, this resulting in the tide and wave-making body 84 coming in and going out of the tide tub 16. With the hydroponic apparatus shown in Fig. 8, substantially the same effects are obtainable as with the hydroponic method by the use of the hydroponic apparatus shown in Fig. 1 - Fig. 4.

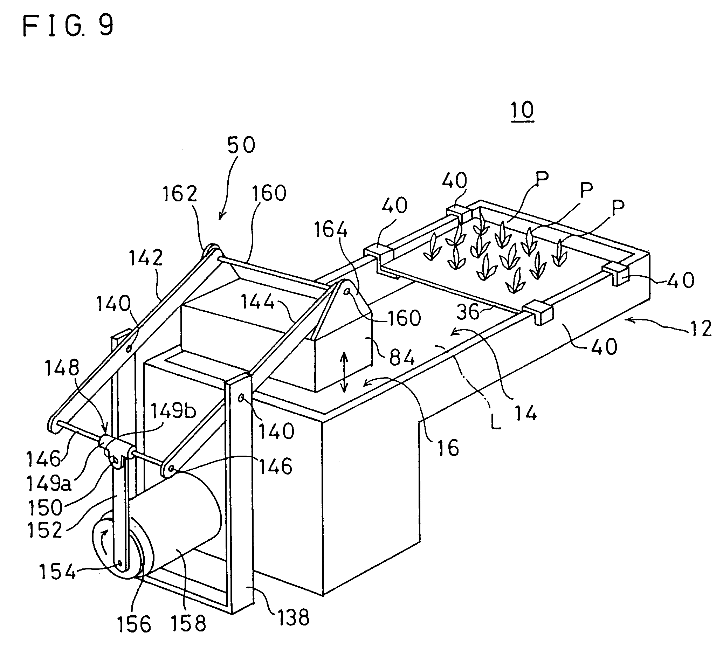

Fig. 9 is a perspective view showing the essential parts of another embodiment of the hydroponic apparatus for execution of the hydroponic method of the invention.

Compared with the hydroponic apparatus shown in Fig. 1 - Fig. 4, the hydroponic apparatus 10 shown in Fig. 9 is different especially in the construction of the tide and wave maker 50. In the hydroponic apparatus 10 shown in Fig. 9 the tide and wave maker 50 is mounted to one longitudinal end of the bed 12. In this case the tide tub 16 are mounted to one longitudinal end of the bed 12 and the tide and wave-making body 84 is disposed above the tide tub 16.

This tide and wave maker 50 includes a supporting frame 138 is formed in the outside of one longitudinal end of the bed 12. The supporting frame 138 is formed to be approximately U-sectioned and made of, for example, a metal. At one end and the other end of the supporting frame 138 are held with each pivot 140 as the fulcrum, for example, approximately rectangle-sectioned and semi-round ended arm members 142 and 144.

Between each end of arm members 142 and 144 a shaft 146 is set therethrough free to rotate. Axially mid portion of this shaft 146 has set thereon, for example, a T-sectioned pull member 148. This pull member 148 includes, for example, a cylindrical insertion portion 149a and at the axial center of this insertion portion 149a there is formed a rectangular plate-shaped operating rod 152 freely rotatable with a pin 150 as the fulcrum and extending downward. At the lower end of this operating rod 152, for example, a oval-shaped crank member 156 is connected free to rotate by means of a crank pin 154. This crank member 156 is connected to the driving shaft (not shown) of a motor 158.

Meanwhile, the other axial ends of the arm members 142 and 144 have annexed thereto a parallelepiped tide and wave-making body 84 free to rotate with the other pivots as fulcra. In this case both axial ends of the shaft 160 have connected thereto each one, for example, triangular plate-shaped holding members 162 and 164. Further, the holding members 162 and 164 have fixed to the underside thereof the tide and wave-making body 84.

With the hydroponic apparatus 10 shown in Fig. 9, when its motor 158 is driven, the crank member 156 set on the driving shaft of the motor 158 is driven to rotate. When the crank member 156 rotates, the arm members 142 and 144 vertically and reciprocatingly with the pivot as fulcrum. When the crank member 156 rotates to bring the crank pin 154 of the operating rod 152 to the upper dead point, the pull member 148 push the shaft 146 upward with simultaneous pushing up of each one axial end of of the arm members 142 and 144. Hence the other axial ends of the arm members 142 and 144 displace downward with the pivot 140 as fulcrum.

Inversely, when the crank member 156 rotates to bring the crank pin 154 of the operating rod 148 to the lower dead point, the pull member 148 pulls the the shaft 146 downward with simultaneous pulling down of each one axial end of the arm member 142 and 144. Hence, the other ends of the arm members 142 and 144 displace upward with the pivot 140 as fulcrum. Hence, the tide and wave-making body 84 is caused to come into and go out of the tide tub 16. With the hydroponic apparatus shown in Fig. 9, substantially the same effects are obtainable as with the hydroponic apparatus shown in Fig. 1 - Fig. 4.

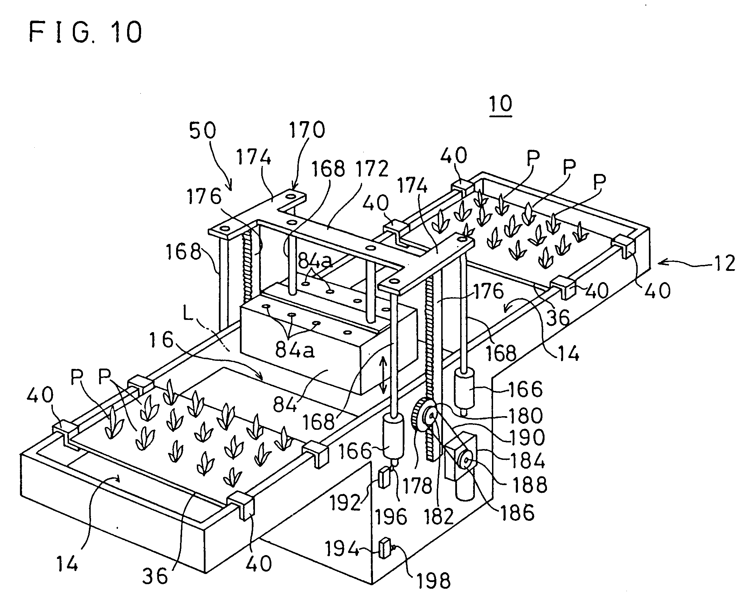

Fig. 10 is a perspective view showing the essential parts of still another embodiment of the hydroponic apparatus for execution of the hydroponic method of the invention.

Compared with the hydroponic apparatus shown in Fig. 1 - Fig. 4, the hydroponic apparatus 10 shown in Fig. 10 is different especially in the construction of the tide and wave maker 50. In the hydroponic apparatus 10 shown in Fig. 10 , the tide and wave maker 50 is located in the longitudinal center of the bed 12. In this case the tide tub 16 are mounted to the longitudinal center of the bed 12 and the tide and wave-making body 84 is disposed above the tide tub 16.

This tide and wave maker 50 includes four cylindrical guide posts 166 made of, for example, a metal material. Of these guide posts 166, either two guide posts 166, 166 are fixed to near the longitudinally middle of one longer side of the bed 12 and the other two guide posts 1667, 166 are fixed to near the longitudinally middle of the other longer side of the bed 12. These four guide posts 166 have, for example, four rods 168 slidably inserted therethrough respectively. The axial upper ends of these rods 168 secured the four ends of a top supporting member 170 which is formed, for example, H-shaped.

This supporting member 170 for suspending and supporting the tide and wave-making body 84 and includes a rectangular plate-shaped swing portion 172. One and the other longitudinal end of this swing portion 172 are formed rectangular rod supports 174, 174. The swing portion 172 and the rod supports 174, 174 are made of, for example, a metal material and formed integral.

In this case, the lower end face of the rod supports 174, 174 has the upper ends of the rods 168, 168 secured to its axial end portion. Further, the lower end face of the swing portion 172 has a tide and wave-making body 84 with a plurality of throughholes 84a suspended therefrom. The tide and wave-making body 84 is suspended from the swing portion 172 by, for example, bolt-and-nut securing means.

The supporting member 170 has racks 176, 176 as a working member. The racks 176, 176 are formed with extending below from the lower end face of the center of the longitudinal of the rod supports 174, 174. In this case, each rack 176 is disposed between the rods 166, 166 which are located to side face of the bed 12. Further, each rack 176 has a mating pinion 178. The pinion 178 is pivoted to one side face of the bed 12. The pinion 178 has annexed a pulley 180 through a shaft 182. Meanwhile, on one side of the bed 12 a motor (not shown) and a driving unit 184 housing a speed change gear which controls the motor speed in its vicinity. The motor's driving shaft 186 has mounted thereon a pulley 188. A belt 190 is set between pulleys 180 and 188 for connecting them.

The hydroponic apparatus 10 shown in Fig. 10 is so arranged that, when the motor 158 is driven, the pulley 188 set on the driving shaft 186 of the motor 158 starts rotating. When the pulley 188 rotates, the pulley 180, too, rotates over the belt 190. When the pulley 180 rotates, the shaft 182 rotates, this followed by rotation of the pinion 178 connected with the shaft 182. The rotation of the pinion 178 is converted into straight movement by the rack 176. In this case, the rack 176 reciprocates vertically as the motor rotates in normal sense or reverses. As the rack 176 reciprocates vertically, the supporting member 170, too, reciprocates vertically. And vertical motion of the supporting member 170 is followed by the vertical motion of the tide and wave-making body 84.

Hence the tide and wave-making body 84 is caused to come into or go out of the tide tub 16. In this case, like the hydroponic apparatus shown in Fig. 1 - Fig. 4, the hydroponic apparatus shown in Fig. 10, too, may be provided with limit switch 192 and 194 for control of the degree of vertical amount of displacement of the tide and wave-making body 84. These limit switches 192 and 194 are arranged so that the lower ends of the rod 168 are pressed against the operating pieces 196 and 198. Even with the hydroponic apparatus 10 shown in Fig. 10, substantially the same effects are obtainable as with the hydroponic apparatus shown in Fig. 1 - Fig. 4.

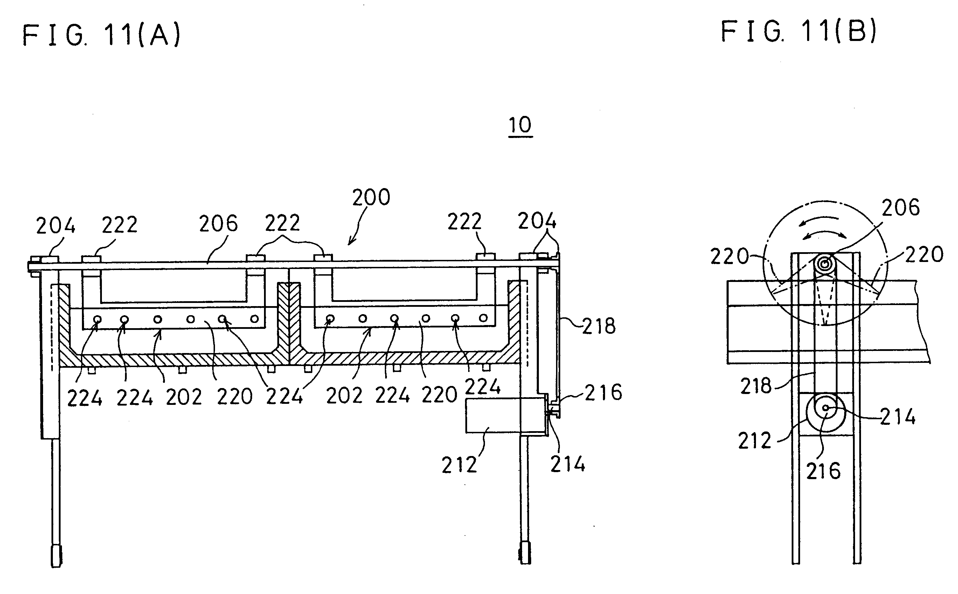

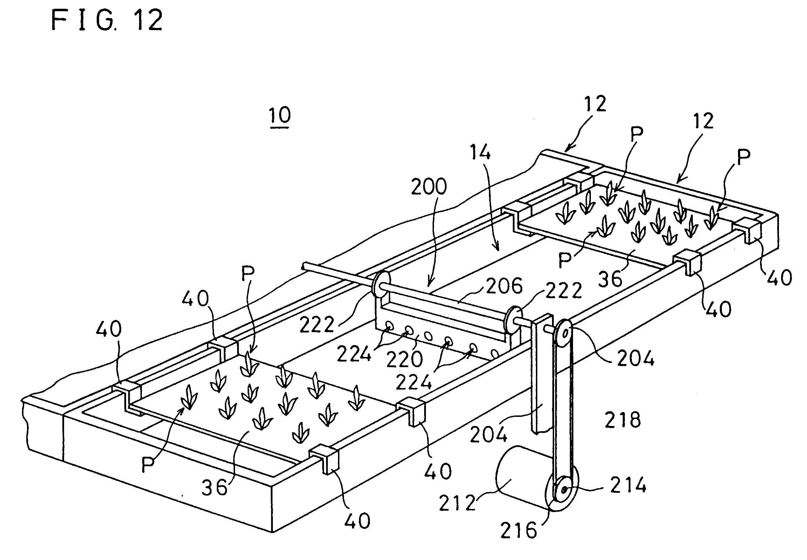

Fig. 11 and Fig. 12 show still another embodiment of the hydroponic apparatus, of which Fig. 11 (A) is a side illustratory view, Fig. 11 (B) is a front view of its essential parts and Fig. 12 is a perspective view of the essential parts thereof. The hydroponic apparatus shown in Fig. 10 is, unlike that shown in Fig. 1 - Fig. 4, is an apparatus for generating waving phenomenon especially in the bed 12 and is used in the cultivation of, for example, a Welsh(spring) onion, Chrysanthemum coronbarium, Brassica Rapa var. pervidis, honewort and lettuce. In the hydroponic apparatus 10 shown in Fig. 11 there is provided a wave maker 200 at the longitudinal center of the bed 12. In this case, the tide tub 16 cannot be formed in the bed 12, only the culture tub 14 is formed in the bed 12. And a wave body 202 is formed above the center of longitudinal of the bed 12.

That is, this wave maker 200 includes a supporting plate 204 made of a metal material and rectangular plate-like. The supporting plate 204 is provided on one and the other lateral sides of the longitudinal center portion of the bed 12. These supporting plate 204 has inserted therethrough a revolving shaft 206 and is supported freely rotatably by the bearing portion 208. The one axial end of the revolving shaft 206 has fixed thereto a pulley 210. Under the bed 12 there is provided a motor 212 as a driving means for rotation of the revolving shaft 206. The driving shaft 214 of the motor 212 has affixed thereto another pulley 216. And between the pulleys 210 and 216 an e. g. V rope 218 is set.

Meanwhile, in the axially mid portion of the revolving shaft 206 two each wave bodies 202, 202 are formed at a given distance. These wave body 202 include sectioned wave-making plate 220, and each wave-making late 220 has at one end and the other end thereof an e.g. disc-like fixture portion 222 fixed integrally. The wave body 202 may possibly be attached to the revolving shaft 206 with the revolving shaft 206 inserted through the hole (not shown) of the fixture portion 222 to thereby fix to the revolving shaft 206. The wave-making plate 220 is so arranged that the wave-making plate 220 has its lower end dipped in the culture solution in the bed 12. The wave-making plate 220 has a plurality of, for example, round holes 224 at a given distance. These holes 224 are for generation of aeration in the culture solution when the wave-making plate 220 has moved in the culture solution in the bed 12.

In the hydroponic apparatus 10 shown in Fig. 11 and Fig. 12, when a motor 212 is driven, simultaneously with rotation of the driving shaft 214 and the pulley 216 and the pulley 204 is rotated via V rope 218. When the pulley 204 rotates, the revolving shaft 206, too, rotates, this followed by rotating of wave-making plate 220 of the wave body 202 attached to the rotating shaft. In this case, proper adjustment of the rpm. of the motor 212 can make it feasible to sway the wave-making plate 220 within a predetermined range (angle) or an angle of 360 degress with the revolving shaft 206 as the center. It is also possible to have the revolving direction of the wave-making plate 220 adjusted properly by proper adjustment of normal driving/reversing of the motor 212 or through adjustment of a normal-reverse crutch attached to the motor 212.

In the hydroponic apparatus shown in Fig, 11 and Fig. 12 it is possible to sway in the range of a predetermined revolving angle with a revolving shaft 206 of the wave body 202 as fulcrum or even by letting it revolve by the angie of 360 degress to thereby beat the the culture solution with its wave-making plate 220 for foaming the culture solution in the bed 12. Hence in this hydroponic apparatus 10 it is possible to create a waving phenomenon in the bed 12.

That is, since it is possible to expose to air periodically the plant P's roots in the culture solution L, it is feasible to supply ample oxygen to the plant's roots and microbes in the culture solution to thereby activate the growth of the plant P. It is also possible to suspend the microbe holder in the culture solution. Hence, even in the hydroponic apparatus shown in Fig. 11 and Fig. 12 effects similar to those attainable by the hydroponic method by the use of the hydroponic apparatus shown in Fig. 1 - Fig. 4.

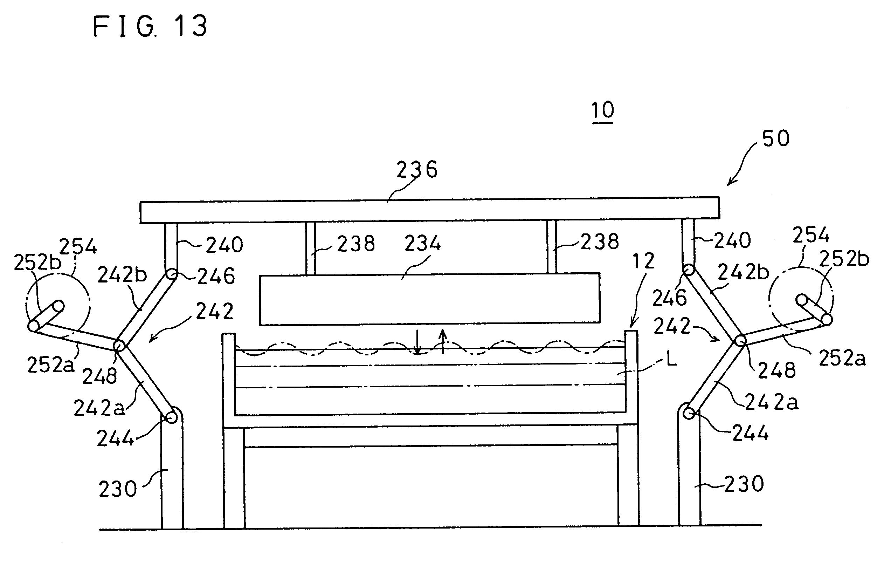

Fig. 13 is an illustratory view of still a further embodiment of the hydroponic apparatus for execution of the hydroponic method of the invention. The hydroponic apparatus 10 shown in Fig. 13 is different from the hydroponic apparatus shown in Fig. 1 - Fig. 4 especially in that a toggle joint mechanism is used for the tide and wave-making mechanism. That is, the tide and wave maker 50 of the hydroponic apparatus 10 shown in Fig. 13 includes stanchion parts 230 on both lateral outsides of the bed 12. The stanchion parts 230 are secured to the ground or the floor outside of the bed 12.

Meanwhile, a tide and wave-making body 234 is disposed above the longitudinal center portion of the bed 12. The tide and wave-making body 234 is held above the bed 12 by means of a holding frame 236. The holding frame 236 is made of, for example, a metal material and has, for example, two bar-like swing members 238, 238 longitudinally extending downward at a given interval. The tide wave-making body 234 are hung by, for example, two swing members 238, 238. The tide and wave-making body 234 is secured to these swing members 238, 238. The holding frame 236 has two supporting parts 240,240 longitudinally extending downward on one and the other side of the holding frame 236.

Between the stanchion part 230 and the supporting part 240 there is formed a toggle joint part 242. The toggle joint part 242 is composed of arms 242a, 242b, joint ports 244, 246 and 248. In this case the joint port 244, being one end of the arm 242a is rotatably connected to the top of the stanchion part 230 and the joint port 246 being one end of the arm 242b is rotatably connected to the lower end of the supporting part 240. Further, to the joint port 248 which connects the other end of the arm 242a and the other end of the arm 242b has connected thereto one end of a connecting rod 252a freely rotatable, while the other end of the connecting rod 252a has connected thereto one end of the turning arm 252b freely rotatable. To the other end of the turning arm 252b the rotary driving means 254, for example, a driving shaft of the motor is connected.

Hence, the turning arm 252b is rotated by driving the rotary drive means 254, therfor the rotary motion of the turning arm 252b is transmited to the arm 242a and 242b of the toggle joint part 242, and the rotary motion of the turning arm 252b is changed into a perpendicular motion. Hence the holding frame 236 goes up and down by the vertical motion. In this case, at the end of the downward motion of the holding fram 236 the three joint ports 244, 246 and 248 are on the same straight line. Since, with up-and-down motion of the holding frame 236 the tide and wave-making body 234 is moved up and down, it is possible to generate the waving phenomenon and by changing the vertical stroke and the period, it is feasible to generate the ebb and fiow phenomenon. Hence with the hydroponic apparatus the same result is attainable as with the hydroponic apparatus shown in Fig. 1 - Fig. 4.

With the hydroponic apparatuses as shown in Fig. 1 - Fig. 4, Fig. 7 - Fig. 10 and Fig. 13 it is possible to make vertical movement of the culture solution L by operating the tide and wave maker 50, and it is possible to flow the culture solution horizontally in a short length of time, therefor the ebb and flow phenomenon is occured in a short length of time.

Further, as compared with wave the surface of the culture solution, the agitation rate of the culture solution is sizably higher, this resulting in easier suspension of the residue in the bottom of the bed 12. Furthermore, the culture solution's flow rate is much higher than with a conventional circulation type of hydroponic apparatus.

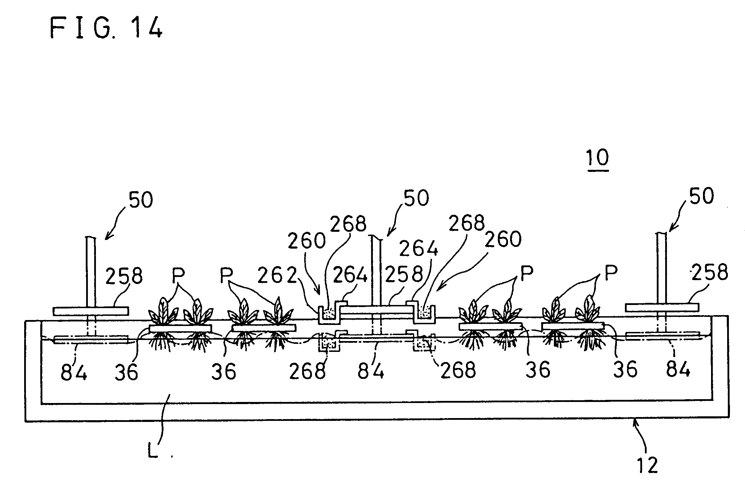

Fig. 14 is an illustratory view of another embodiment. In this embodiment, compared with the hydroponic method by the use of the hydroponic apparatuses shown in Fig. 1 - Fig. 4 and Fig. 7 - Fig. 13, is different in that the suspension system of organic matters such as animal and vegetable matter manure etc. added into the bed 12 for suspension therein are remarkable. In other words, a step of waving the culture solution for suspending the microbe holder in the culture solution and a step of putting natural organic matter into the culture solution in the bed 12 , are practiced simultaneously.

That is, the hydroponic apparatus shown in Fig. 14 comprise, for example, three tide and wave makers 50 are disposed to longitudinal of the bed 12 at regular intervals.

Of those wave making plates 258 arranged above the longitudinal center portion above the bed 12 are featured having a basket 260 for storing organic matters such as animal and vegetable matter manure which serve as baits for organic disintegrated microbes. In this case, the basket 260 include, for example, a U-shape cabinet part 262. This cabinet part 262 is formed e.g. net-like of metals and the like with their end portions secured to the wave-making plates 258 by the use of, for example, a installation piece 258. And in this basket 260 are housed animal matter and vegetable matter manure 268. In this embodiment the number of baskets 260 is two, one fixed to the one and the other longitudinal ends of the wave-making plate 258. The basket 260 may as well be formed of metal net and cloth having a plurality of fine holes.

In the hydroponic method for execution with the hydroponic apparatus shown in Fig. 14 have animal and vegetable matter manure 268 are soaked in the culture solution L in the bed 12 by means of up-and-down motion of the wave-making plate 258. That is, the wave-making plate 258 causes the culture solution to wave with simultaneous soaking of the animal and vegetable matter manure 268 in the basket 260 is soaked in the culture solution L in the bed 12 as the wave-making plate 258 disposed together with simultaneous vertical movement of the wave-making plate 258 disposed above the center of the bed 12. Moreover, simultaneous with waving of the culture solution by the wave-making plate 258 the waving phenomenon can suspend the microbe holder and the animal and vegetable matter manure 268 in the culture solution L. In the hydroponic apparatus shown in Fig. 14, too, same effects are attainable as the effects attainable by the hydroponic method by the use of the hydroponic apparatus shown in Fig,. 1 - Fig. 4.

The basket 260 for organic matter such animal and vegetable manure 268 may be properly used in the tide and wave-making body of the hydroponic apparatuses shown in Fig. 1 - Fig. 6, Fig. 7 - Fig. 10 and Fig. 13, besides the hydroponic apparatus shown in Fig. 14.

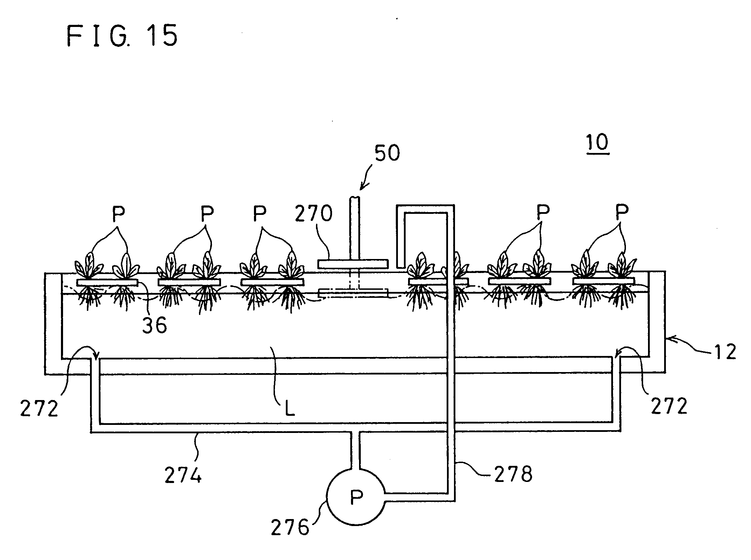

And such baskets may be used in the wave-making body of the hydroponic apparatus shown in Fig. 11 and Fig. 12 and as well be added to the individual wave-making plate of the hydroponic apparatus shown in Fig. 15 - Fig. 18.

Fig. 15 is an illustratory view showing still another embodiment of this invention. In this embodiment, compared with the hydroponic method for execution with the hydroponic apparatuses shown in Fig. 1 - Fig. 4 and Fig. 4 - Fig. 13, there is provided a system for circulating deposits of microbes added in the bed 12 and deposits of microbe holders and residues of animal and vegetable matter manure recirculated in the culture solution in the bed 12. That is, in the hydroponic apparatus 10 shown in Fig. 15, the tide and wave maker 50 is provided only one above the longitudinal center of the bed 12, for waving the culture solution its wave-making plate 270 only is usable, hence at both longitudinal ends deposits of microbe holders and residues of animal and vegetable matter manures are likely to be suspended in the bottom of the bed 12.

In the hydroponic apparatus 10 shown in Fig. 15 there are formed two intakes 272, 272 in the bottom of the bed 12. To these intakes 272 exhaust pipes 274 are connected and the exhaust pipes are connected to the circulating pump 276. Further, the circulating pump 276 is connected with circulating pipes 278. By this circulating pump 276 the deposits of microbe holders on the bottom of the beds 12 and residues of the animal and vegetable matter manure are swayed and are injected into culture solution L in the bed 12 past the circulating pump 278.

Hence, in the hydroponic method by the use of the hydroponic apparatus shown in Fig. 15 it is possible to circulate microbe holders, which provide good housing for the vegetable for microbes useful for the activity of plant P, frequency of newly injecting microbe holders is lowered, this further reducing the exchange frequency of the culture solution.

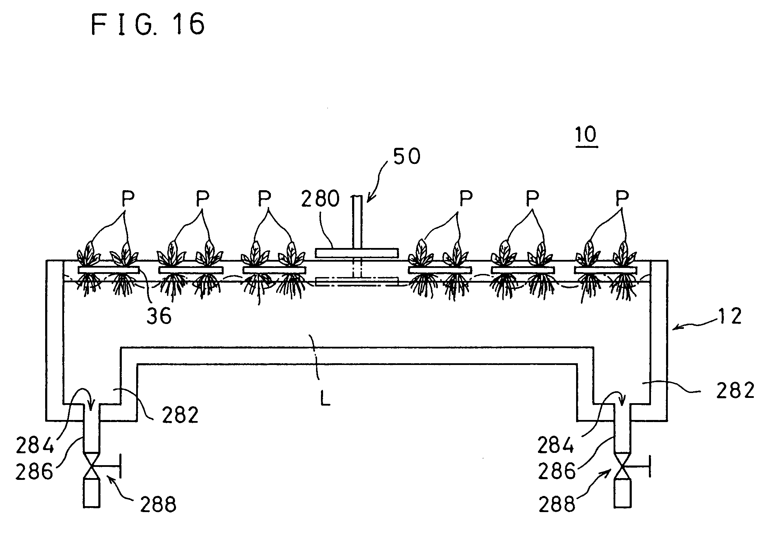

Fig. 16 is an illustratory view showing still another example of the hydroponic apparatus for execution of the invention. In this embodiment, unlike with the hydroponic method shown in Fig. 15, there are provided two ejection tubs 282, 282 are formed on one end and the other end portions of longitudinalof the bottom in the bed 12. Further, at the center of these ejection tubs 282 there are provided e.g. round ejection ports 284, 284. These ejection ports 284, 284 have connected thereto ejection tubes 286, 286 connected thereto and these ejection tubes 286, 286 have set therein ejection valves 288, 288. In the hydroponic method by the use of the hydroponic apparatus 10 shown in Fig. 16 it is possible to take out microbe holders deposited in the ejection tube 282 by opening the ejection valve 288 as well as residues of animal and vegetable matter manure. Deposits of microbe holders and residues of animal and vegetable matter manures are thrown into the culture solution in the bed e.g. manually for reuse.

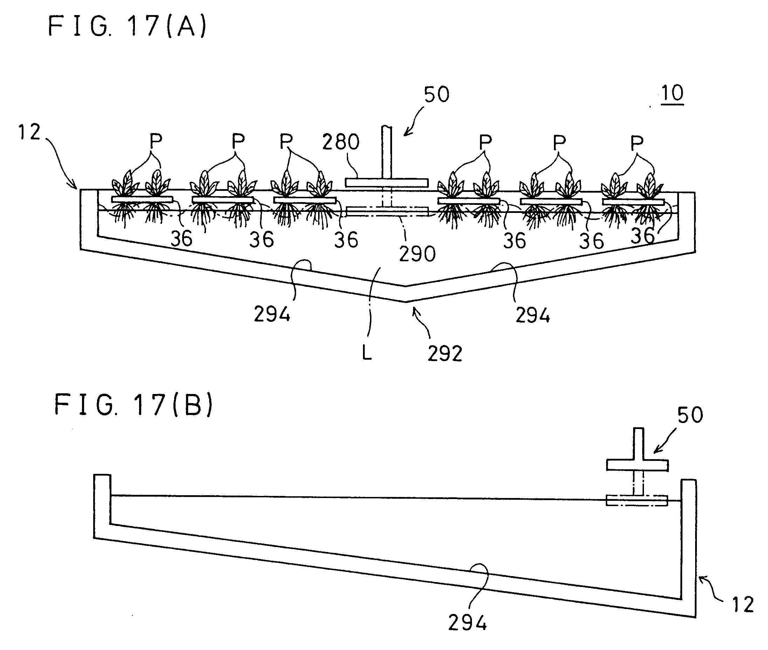

Fig. 17 is an illustratory view showing still another embodiment of the hydroponic apparatus for execution of the invention. The embodiment, relating to the hydroponic method by the use of a hydroponic apparatus, deals with a method of reducing the amount of deposits of microbe holders and organic matters on the bottom of the bed 12. Unlike the hydroponic apparatus shown in Fig. 1 - Fig. 4 and Fig. 7 - Fig. 16, the hydroponic apparatus 10 shown in Fig. 17 is has an incline part 294 in the bottom of the bed 12.

That is, in the hydroponic apparatus 10 shown in Fig. 17 (A), the bottom is sloped from one and the other longitudinal ends toward the longitudinal center. In the hydroponic apparatus shown in Fig. 17 used for execution of the hydroponic method of the invention, therefore, if only one wave-making plate 290 is disposed above the longitudinal center, the deposits of microbe holders, organic matters etc. flow on the bottom 292 of the bed 12 toward the longitudinal center of the bed 12along the incline part 294. Moreover, since most of these deposits are stirred by the up-and-down motion of the wave-making plate 290, these deposits are difficult to collect on the bottom of the bed 12.

The incline part 294 of the bottom of the bed 12 may as well be from one longitudinal end toward the other end of the bed 12.

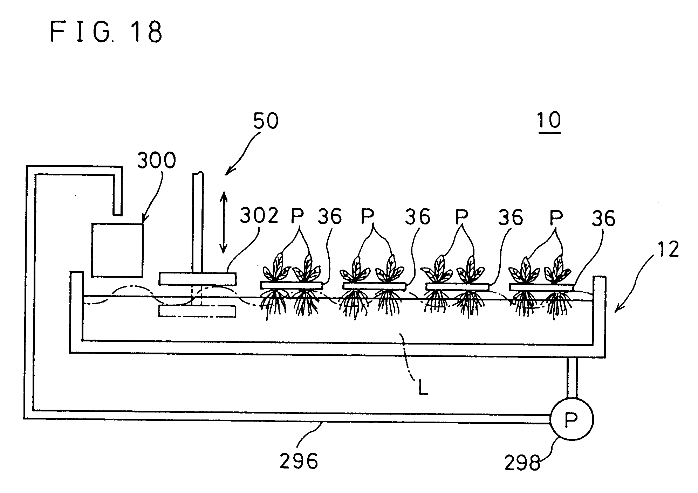

Fig. 18 is an illustratory view of a still another embodiment of the hydroponic apparatus for execution of the method of the invention. In this embodiment, unlike with the hydroponic method executed using the hydroponic apparatus shown in Fig. 1 - Fig. 4 and Fig. 7 - Fig. 17, the culture solution stored in the bed 12 is circulated by a circulating pump 298. In this case, this hydroponic apparatus 10 is provided with a circulating pipe 296, which extends from one longitudinal end of the bottom of the bed 12 toward the other longitudinal end. Further, between the other longitudinal end of the bed 12 and the culture solution surface in the bed 12 there is disposed a filtration tub 300. In the hydroponic method for execution by the use of the hydroponic apparatus shown in Fig. 18 the culture solution L in the bed is led by the circulating pump 298 through the circulating pipes 296 and past the filtration tub 300 back into the bed 12. Even in the hydroponic method using the hydroponic apparatus shown in Fig. 18 the culture solution L is beaten by the wave-making plate 302 of the tide and wave maker 50 to cause the waving phenomenon for ample supply of oxygen to the roots of plant P and the microbes in the culture solution L.

Moreover, in the hydroponic method shown in Fig. 8 the temperature of the culture solution L ca be made lower than in the atmospheric temperature in the house by waving the culture solution L and collection of the residues on the bed 12 can well be prevented.

It will be apparent from the foregoing that, while the present invention has been described in detail and illustrated, these are only particular illustrations and examples, and the present invention is not limited to these. The spirit and scope of the present invention is limited only by the appended claims.

## Claims

1. A hydroponics method comprising:
a step of preparing a bed;
a step of removably place a planting panel with planted of a plant on said bed;
a step of storing in said bed a culture solution containing microbe known to be effective for enhancing the growth of said plant;
a step of putting into said culture solution in said bed a microbe holder providing housing for said microbe;
a step of waving said culture solution for suspending said microbe holder in said culture solution and further expose said roots of said plant periodically to the air from said culture solution ;
a step of putting natural organic matter into said culture solution in said bed.

2. A hydroponics method according to claim 1, wherein said microbe include a decomposable microbe can decompose organic matter.

3. A hydroponics method according to claim 2, wherein said microbe holder include at least one of botanical charcoal and clay mineral.

4. A hydroponics method according to claim 3, wherein said natural organic matter is formed of animal and vegetable matter manure.

5. A hydroponics method according to claim 4, further comprising a step of causing ebb and flow of said culture solution in said bed by moving up and down the level of the culture solution in said bed periodically and expose said roots of said plant periodically to the air from said culture solution.

6. A hydroponics method according to claim 5, comprising a step of inorganizing said natural organic matter by means of said microbes in said culture solution.

7. A hydroponics method according to claim 6, wherein said step of waving said culture solution for suspending said microbe holder in said culture solution and further expose said roots of said plant periodically to the air from said culture solution, and said step of putting natural organic matter into said culture solution in said bed , are practiced simultaneously.

8. A hydroponics method according to claim 7, comprising a step of circulating residues of said microbe holder and said natural organic matter in said culture solution collecting on the bottom of said bed.

9. A hydroponics method according to claim 1, wherein said microbe include photosynthesis bacteria.

10. A hydroponics method according to claim 1, wherein said microbe holder comprising more than one of natural stones or ceramics.

11. A hydroponics method according to claim 3, wherein said botanical charcoal includes carbonized seaweeds.

12. A hydroponic apparatus comprising a bed, a planting panel for planting of a plant which mounted above said bed and a culture solution for growth of said plant is stored in said bed so as to submerging the tip of roots of said plant and further comprising:
a tide tub provided at least part of said bed;
a cubic body disposed above said tide tub; and
a displacement means for displacing vertical the water level of said culture solution in said bed by means of periodically taking said cubic body in and out of said tide tub; and
the roots of said plant are exposed periodically to the air from said culture solution with said displacement means for displacing.

13. A hydroponic apparatus according to claim 12, wherein said displacement means include:
a supporting body disposed to said bed beside;
a revolving shaft supported by said supporting body free to rotate;
a means for revolving said revolving shaft;
an elevator plate formed to be capable of producing movement or displacement along the axial position of said revolving shaft by means of said revolving shaft revolves ; and
an arm member supporting to be disposed said cubic body above said tide tub and connected with said elevator plate.

14. A hydroponic apparatus according to claim 13, wherein said revolving shaft has a male screw portion, said elevator plate is secured to a socket member having a mating female screw portion and said elevator plate includes a guide rod against rotation of said elevator plate.

15. A hydroponic apparatus according to claim 14, further comprising a sensor for regulating the upper and lower limit positions for said elevator plate.

16. A hydroponic apparatus according to claim 12, wherein said displacement means comprising:
a shaft disposed above said tide tub free to rotate;
a means for rotating said shaft;
a crank member formed at one axial end of said shaft;
an operating member supported by said crank member free to rotate and vertically reciprocable; and
a supporting member held by said operating member for holding said cubic body and supporting said cubic body above said tide tub.

17. A hydroponic apparatus according to claim 12, wherein said displacement means comprising:
a U-shape supporting frame positioned on both sides of said tide tub;
an arm member supported on top of said supporting frame on a pivot free to rotate;
a pull member formed at one end of said arm member and is capable of vertically displacing the other end of said arm member with said pivot as fulcrum;
a crank member connected to one end of said pull member free to rotate;
a means connected to said crank member for rotating for rotating said crank member; and
a supporting member attached to the other end of said arm member for supporting said cubic body to be disposed above said tide tub.

18. A hydroponic apparatus according to claim 12, wherein said displacement means comprising:
a pinion formed on one side of said tub of said bed to be free to rotate;
a means for rotating said pinion;
a rack in engagement with said pinion and moves vertically as said pinion rotates; and
a supporting member provided with said rack so as to dispose said cubic body above said tide tub.

19. A hydroponic apparatus according to claim 12, wherein a net-like cabinet part for holding said natural organic matter is mounted to said cubic body.

20. A hydroponic apparatus according to claim 12, wherein an ejection pipe is provided for taking out residues of said microbe holder and said natural organic matter collecting on the bottom of said bed, and said ejection pipe is connected with a circulating pump for circulating said residue and said residue is returned to said culture solution.

21. A hydroponic apparatus according to claim 20, wherein an ejection tub is formed in the bottom of said bed for taking out the residue of said microbes holder and of said natural organic matter in said culture solution which collect on the bottom of said bed.

22. A hydroponic apparatus according to claim 12, wherein a slope is formed to decrease the risk of said residues of said microbe holder and said natural organic matter collecting on the bottom of said bed.

23. A hydroponic apparatus according to claim 12, wherein said tide tub is formed at the center of said bed and at least either end of said bed.
